(19)

Europäisches
Patentamt
European
Patent Office
Office européen
des brevets

(11) **EP 2 076 074 A1**

(12) **EUROPEAN PATENT APPLICATION**

(43) Date of publication:
**01.07.2009 Bulletin 2009/27**

(51) Int Cl.:
**H04W 24/00** (2009.01)

(21) Application number: **07025141.8**

(22) Date of filing: **27.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventor: **Kollar, Martin**
**04011 Kosice (SK)**

(74) Representative: **Weidel, Gottfried**
**Nokia Siemens Networks GmbH & Co. KG**
**Patentabteilung**
**Postfach 80 17 60**
**81617 München (DE)**

(54) **Calculation of standard deviation for frame erasure rate measurements using adaptive multi rate codecs on a per codec type basis**

(57)     It is described a method for calculating a Standard Deviation Value for measurements of the Frame Erasure Rate for a speech transmission using an Adaptive Multi Rate codec procedure for a predefined observation period and for a given Adaptive Multi Rate codec type. The method comprises (a) determining a preliminary Standard Deviation Value for measurements of the Frame Erasure Rate for a predefined period of a Control Channel, and (b) calculating the Standard Deviation Value for measurements of the Frame Erasure Rate for the given Adaptive Multi Rate codec type and for the predefined observation period based on the preliminary Standard Deviation Value. It is further described an equipment of a mobile telecommunication network, a computer-readable medium and a program element, which are adapted for performing and/or for controlling the above described method.

FIG 3

```
                    ( Start )
                        │
         Reset   ┌──────▼──────────┐
           ┌────▶│ Monitoring whether │
           │     │ there is a AMR     │
           │     │ codec type chance  │
           │     └──────┬──────────┘
           │            │
           │        ┌───▼───┐
           │       / New EMR  \    No
           │      ⟨ received?  ⟩──────▶
           │       \         /
           │        └───┬───┘
           │            │ Yes
           │     ┌──────▼──────────┐
           │     │ Determination of standard │
           │     │ deviation value of DL     │
           │     │ FER per SACCH period      │
           │     └──────┬──────────┘
           │            │
           │     ┌──────▼──────────┐
           │     │ Assigning of standard     │
           │     │ deviation value of DL FER │
           │     │ per SACCH period to the   │
           │     │ current AMR codec type    │
           │     └──────┬──────────┘
           │            │
                    ( Start )
```

**Description**

Field of invention

The present invention relates to the field of telecommunication networks. In particular the present invention relates to measurement reports of a Frame Erasure Rate, which reports are transmitted from a Mobile Station to a Base Transceiver Station. Specifically, the present invention relates to a method for calculating a Standard Deviation Value for measurements of the Frame Erasure Rate for a speech transmission using an Adaptive Multi Rate codec procedure. Further, the present invention relates to an Equipment of a mobile telecommunication network, which is adapted to carry out the method as described above. Furthermore, the present invention relates to a computer-readable medium and to a program element having instructions for controlling the above-mentioned method for calculating a Standard Deviation Value for measurements of the Frame Erasure Rate for a speech transmission using an Adaptive Multi Rate codec procedure.

Art Background

Global System for Mobile communications (GSM: originally from Groupe Spécial Mobile) is the most popular standard for mobile phones in the world. GSM is used by over 2 billion people across more than 212 countries and territories. Its ubiquity makes international roaming very common between mobile phone operators, enabling subscribers to use their phones in many parts of the world. GSM differs from its predecessors in that both signaling and speech channels are digital call quality, and so is considered a second generation (2G) mobile phone system. This has also meant that data communication were built into the system using the 3rd Generation Partnership Project (3GPP).

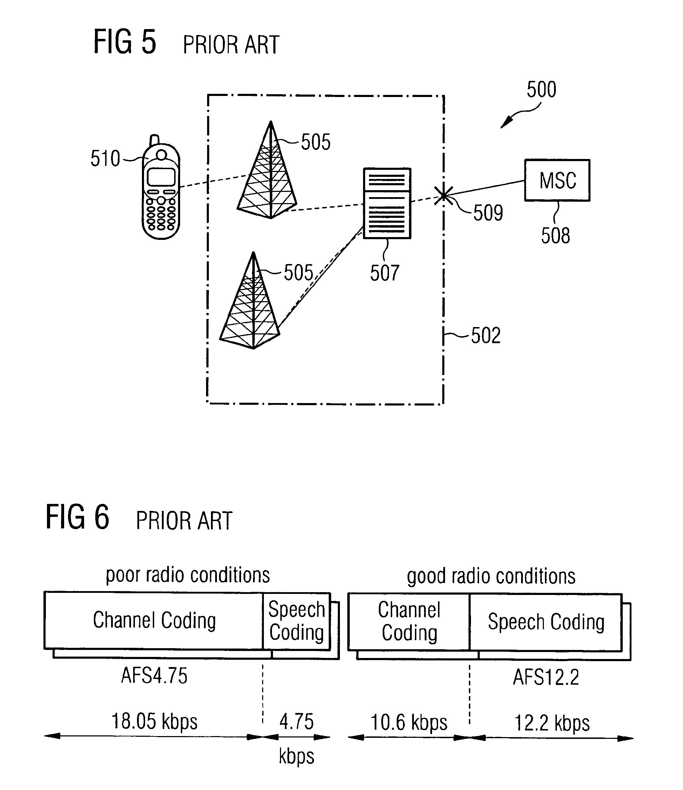

A part 500 of GSM network is shown in Figure 5. The part 500 comprises a Base Station Subsystem 502, which includes Base Transceiver Stations 505. In Figure 5 two Base Transceiver Stations 505 are depicted. The Base Transceiver Stations 505 contains the equipment for transmitting and receiving of radio signals (transceivers), antennas, and equipment for encrypting and decrypting communications with a Base Station Controller 507 and with a Mobile Station 510. Typically a Base Transceiver Station 505 has several transceivers, which allow it to serve several different frequencies and different sectors of a cell of the GSM network. A Mobile Switching Center 508 is used to connect different Base Station Controllers 507 of different Base Station Subsystems 502.

The Base Station Controller 507 provides, classically, the intelligence behind the Base Transceiver Stations 505. The Base Station Controller 507 handles allocation of radio channels, receives measurements from the mobile phone 510, controls handovers between different Base Transceiver Stations 505 (except in the case of an inter-Base Station Controller handover in which case control is in part the responsibility of the Anchor Mobile Switching Center 508). A key function of the Base Station Controller 507 is to act as a concentrator where many different low capacity connections to Base Transceiver Stations 505 (with relatively low utilisation) become reduced to a smaller number of connections towards the Mobile Switching Center 508 via a standardized A interface 509.

GSM codes speech in 20-ms frames. In each frame, a 3-bit cyclic redundancy code (CRC) is added to the 50 most significant bits. When the mobile decodes the 260 bits received in the frame, it verifies the 3-bit CRC for the 50 most significant bits. If the CRC check fails, the frame is erased and not passed to the vocoder for speech decoding. Since only 3 bits are used for the CRC, the probability of detecting bad frames is very low. This probability increases with the use of an enhanced full rate (EFR) coder, which uses 8 bits in the preliminary coding stage and 3 bits in the next stage. However, it has turned out that EFR is not robust enough against bad radio conditions.

A substantial improvement has been achieved by the applying Adaptive Multi Rate Speech (AMR) Codecs. Thereby, in dependence on the current radio conditions the AMR codec type is changed. There are eight codec types included in a Codec Set for Full Rate (FR) and five codec types included in a Codec Set for Half Rate (HR) channels. Figure 6 shows an example where AMR FR codec AFS 4.75 kbps is used for poor radio conditions and AMR FR codec 12.2 kbps is used for good radio conditions.

In general the Frame Erasure Rate (FER) is calculated as the ratio of erroneous and total number of speech frames received during a predefined observation period within a call. For downlink (DL) the number of erroneous frames is obtained from above mentioned Enhanced Measurement Report (EMR) sent by a Mobile Station (MS) each 480 ms via the so called Slow Associated Control Channel (SACCH). In principle the DL FER should be provided per AMR codec type but, as known, the AMR codec can be changed in dependence on the conditions for the transmission of signals in the network and EMR does not provide the information about the used AMR codec.

There may be a need for providing a method which allows to fulfill an indispensable precondition for providing the Erasure Rate (FER) for a speech transmission using an Adaptive Multi Rate (AMR) codec procedure on a per codec type basis.

Summary of the Invention

This need may be met by the subject matter according to the independent claims. Advantageous embodiments of the present invention are described by the dependent claims.

According to a first aspect of the invention there is provided a method for calculating a Standard Deviation Value for measurements of the Frame Erasure Rate for a speech transmission using an Adaptive Multi Rate codec procedure for a predefined observation period and for a given Adaptive Multi Rate codec type. The provided method comprises (a) determining a preliminary Standard Deviation Value for measurements of the Frame Erasure Rate for a predefined period of a Control Channel, and (b) calculating the Standard Deviation Value for measurements of the Frame Erasure Rate for the given Adaptive Multi Rate codec type and for the predefined observation period based on the preliminary Standard Deviation Value.

The described method for calculating or for evaluating the Standard Deviation Value for measurements of the Frame Erasure Rate (FER) per Adaptive Multi Rate (AMR) codec type is based on the idea that in AMR procedure there is always a maximum error for the real FER. This is based on the matter of fact that in case the real FER error is going to exceed a predefined ratio of for instance 10% the AMR procedure would change the codec type towards a more robust codec type causing the real FER to abruptly decrease significantly. This knowledge about the maximum possible error, which is based on predetermined FER thresholds for changing the codec type, can be exploited for determining the preliminary Standard Deviation Value for measurements of the Frame Erasure Rate for the predefined period of a Control Channel.

The described method may provide the advantage that the resultant FER can be reported in particular from a Mobile Station (MS) to a Base Transceiver Station (BTS) on a per codec basis at the end of the observation period.

Typically, the observation period is longer than the period of the control channel. Therefore, based on the knowledge of the preliminary Standard Deviation Value the Standard Deviation Value for measurements of the Frame Erasure Rate for the given AMR codec type and for the predefined observation period can be calculated based on known statistical procedures. These procedures of course have to reflect the matter of fact that the longer the observation period is the smaller the final Standard Deviation Value has to be because in reality a larger number of measurements, wherein each comprises a certain statistical error, would also lead to a reduction of the effective statistical error of a measurement value, which combines all the measurements.

It has to be mentioned that all steps of the described method are carried out theoretically. It is not intended however also not forbidden to accomplish a plurality of measurements experimentally and to derive, based on the real measurement results, the preliminary and/or the final Standard Deviation Value.

According to an embodiment of the invention, the determined preliminary Standard Deviation Value is assigned to the Adaptive Multi Rate codec type, which was last used within the predefined period of the Control Channel, if there is a change of the Adaptive Multi Rate codec type.

This means that a FER, which is theoretically determined based on the calculated Standard Deviation Value, is distributed to the currently or last used AMR codec type. Due to the threshold based AMR codec type changes the error cannot exceed a predefined error value, which depends on the granularity of the available AMR codes types. However, this error will be acceptable also in the worst case where such a change occurs between a) the last but one speech frame and b) the last speech frame within the predefined period of the Control Channel. In practice it has turned out that the corresponding error is only about 10% even if for instance the first 23 speech frames were coded with the known codec type 12.2 kbps while the last speech frame was coded by using the codec 5.9 kbps.

It has to be mentioned that in practice it is quite normal that two or even more codec changes occur within one predefined period of the Control Channel. However, also such a multiple codec type change also leads to acceptable maximal errors for the worst case.

According to a further embodiment of the invention for determining the preliminary Standard Deviation Value a uniform distribution of the Frame Erasure Rate between a first Frame Erasure Rate and a second Frame Erasure Rate is assumed.

The assumption of a uniform distribution corresponds to an assumption of randomly distributed Frame Erasure Rates between the first and the second Frame Erasure Rate. This may provide the advantage that the computational efforts for carrying out the determination of the preliminary Standard Deviation Value will be comparatively low. Therefore, the described method can be implemented in a currently used BTS without having the need to adapt the BTS one a complex and expensive hardware basis.

The described hypothesis to consider uniform probability distribution is also valid in cases where no information is available leading to decide which probability distribution should be considered. Simply said when there is no information to decide which probability of distribution has to be considered, the best is to consider a probability distribution.

According to a further embodiment of the invention the first Frame Erasure Rate is Zero. This may provide the advantage that even though the used uniform distribution of the Frame Erasure Rate seems to be a rather rough estimation only, the resulting Standard Deviation Value represents a very realistic value. Therefore, a very precise and realistic FER can be reported for instance from a MS to a BTS on a AMR codec type basis.

It has to be mentioned that for a uniform probability distribution the preliminary standard deviation value, which represents an interval into which a sample of the error will fall with the probability about of 60%, is $\dfrac{\left|\Delta_{SACCHMAX}\right|}{2\sqrt{3}}$. This is based on generally known statistical formulas for calculating a Standard Deviation for a uniform distribution of an arbitrary value. Thereby, $\Delta_{SACCHMAX}$ is the assumed value for the maximal error of the FER.

Further, the corresponding mean value $E(\xi)$ will be $\dfrac{\Delta_{SACCHMAX}}{2}$. Thereby, $\xi$ is a random variable changing in the range from 0 to $\Delta_{SACCHMAX}$.

According to a further embodiment of the invention the Frame Erasure Rate is a Downlink Frame Erasure Rate.

This may provide the advantage that the described method can be easily implemented in already existing GSM (Global System for Mobile Communications) telecommunication networks and also in third Generation telecommunication networks like UMTS (Universal Mobile Telecommunications System) or LTE (Long Term Evolution) networks. In the corresponding standards of these networks it is prescribed that a MS regularly sends a measurement report to a serving BTS.

In addition to other values the measurement report also includes FER values. The calculated Standard Deviation Value for the FER is therefore a useful parameter, which can be sent for instance to the MS from a BTS. In this respect it seems to be appropriate if the calculation according the described method is carried out directly in the BTS.

According to a further embodiment of the invention the Adaptive Multi Rate codec procedure is a Full Rate Codec procedure or a Half Rate Codec procedure. This may provide the advantage that the described method for calculating the Standard Deviation Value for measurements of the FER per AMR codec may be used for different types of codecs. In particular, the described method may be used for Full Rate (FR) and also for Half Rate (HR) channels.

According to a further embodiment of the invention the Control Channel is a Slow Associated Control Channel. The period of the Slow Associated Control Channel (SACCH) may be in the range respectively in the dimension of about 1 Hz. In particular the period may be 480 ms. The SACCH may be used for transmitting a measurement report from a MS to the serving BTS. The measurement report may include power measurements of transmission links between the MS and neighboring BTS for ascertaining whether a handover to another BTS would improve the radio transmission link to the telecommunication network.

The determination of the preliminary Standard Deviation Value per SACCH period may provide the advantage that the described method can be executed in a synchronous manner with respect to the known transmission of the number of erroneous and corrected speech frame respectively at the end of a SACCH period. Thereby, the transmission of the number of erroneous and corrected speech frame can be carried out by a MS.

According to a further embodiment of the invention the observation period is an integer multiple of the period of the Slow Associated Control Channel. This may provide the advantage that the Downlink (DL) FER may be calculated on per codec type basis from the number of erroneous and correct speech frames from N SACCH periods. This may be quantitatively described by the following Equation:

$$\text{DLFER}(\text{codec}) = \frac{\sum\limits_{i=1}^{N}\text{NumErronousSpeechFrames}_i(\text{codec})}{24 \times N} \cdot 100\%$$

In this Equation DLFER(codec) is the DL FER on per codec type basis, the numerator represents the sum of erroneous frames received by one MS during for instance 480 ms, which corresponds to 24 speech frames each one with a duration of 20 ms. The parameter N represents the observation period given in periods of the SACCH.

According to a further embodiment of the invention the method further comprises providing the Frame Erasure Rate on a per codec type basis. This may provide the advantage that not only the Standard Deviation Value for measurements of the Frame Erasure Rate can be calculated on a per codec type basis but also the number of erroneous speech frames can be provided on a per codec type basis from a MS to a BTS in the known Enhanced Measurement Report (EMS).

According to a further embodiment of the invention for providing the Frame Erasure Rate on a per codec type basis a systematic error is taken into account.

The systematic error may be for instance a total mean value $\mu$ per observation period N (in units of the period of the Control Channel respectively the SACCH) and per codec type j. The value $\mu$ might be given by the following formula:

$$\mu_j = \frac{\sum_{n=1}^{N} \Delta_{SACCHMAX_{j,n}}}{2N}$$

When taking into account the systematic error per codec type j the following formula can be applied:

$$DLFER_j = DLFER(j) - \mu_j \pm \sigma_j$$

Thereby, *DLFER(j)* and $\mu_j$ can be calculated by means of the formulas given above and $\sigma_j$ is given by

$$\sigma_j = \frac{1}{N} \sqrt{\sum_{n=1}^{N} \left( \frac{|\Delta_{SACCHMAX}|}{2\sqrt{3}} \right)^2_{j,n}} \; ,$$

wherein $\dfrac{|\Delta_{SACCHMAX}|}{2\sqrt{3}}_{j,n}$ represents the standard deviation value for measurements of the DL FER in the n-th SACCH period and for codec type j.

According to a further aspect of the invention there is provided an equipment of a mobile telecommunication network, in particular a Base Transceiver Station or a Mobile Station of a mobile telecommunication network. The provided equipment comprises a processor, which is adapted for performing the above-described method for calculating a Standard Deviation Value for measurements of the Frame Erasure Rate for a speech transmission using an Adaptive Multi Rate codec procedure for a predefined observation period and for a given Adaptive Multi Rate codec type.

This aspect of the invention is based on the idea that the above described method can be implemented on standard equipment in particular for GSM telecommunication networks. The possibility to calculate the Standard Deviation Value on a per codec type basis allows measurement reports to be much more precise with respect to a FER and in particular with respect to a DL FER. Specifically speaking the reliability of an executed measurement can be evaluated by specifying the Standard Deviation Value on a per codec type basis, which Standard Deviation Value has been calculated based on theoretical assumptions respectively estimations.

According to a further aspect of the invention there is provided a computer-readable medium on which there is stored a computer program for calculating a Standard Deviation Value for measurements of the Frame Erasure Rate for a speech transmission using an Adaptive Multi Rate codec procedure for a predefined observation period and for a given Adaptive Multi Rate codec type. The computer program, when being executed by a data processor, is adapted for controlling the above-described method.

According to a further aspect of the invention there is provided a program element for calculating a Standard Deviation Value for measurements of the Frame Erasure Rate for a speech transmission using an Adaptive Multi Rate codec procedure for a predefined observation period and for a given Adaptive Multi Rate codec type. The program element, when being executed by a data processor, is adapted for controlling the above-described method.

The computer program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or other programmable device to carry out the intended functions. The computer program may be available from a network, such as the WorldWideWeb, from which it may be downloaded.

The invention may be realized by means of a computer program respectively software. However, the invention may also be realized by means of one ore more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims.

However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows a diagram depicting the dependency of the Frame Erasure Ratio (FER) on the Carrier to Interference Ratio (CIR) for different Adaptive Multi Rate (AMR) codec types according to practical results.

Figure 2 shows a random variable ξ with a uniform probability distribution.

Figure 3 shows a flowchart indicating the determination of a preliminary Standard Deviation Value for measurements of the FER for the predefined period of a Slow Associated Control Channel (SACCH) and the assignment of the preliminary Standard Deviation Value to the current AMR codec type.

Figure 4 shows a flowchart indicating the calculating the Standard Deviation Value for measurements of the FER for the given AMR codec type and for the predefined observation period based on the preliminary Standard Deviation Value.

Figure 5 shows a part of a GSM network (prior art).

Figure 6 shows the ratio between Channel coding and Speech coding for two different AMR Full Rate (FR) codecs being used for different radio conditions (prior art).

Detailed Description

To provide the resultant standard deviation value in measurement of the Downlink (DL) Frame Erasure Rate (FER) firstly the standard deviation value in measurement of DL FER and per Slow Associated Control Channel (SACCH) period must be determined because the Mobile Station (MS) sends the number of erroneous and corrected speech frame at the end of SACCH period. In this application the standard deviation value in measurement of DL FER and per SACCH period is also denominated preliminary Standard Deviation Value.

Secondly, the standard deviation value in measurement of DL FER per Adaptive Multi Rate (AMR) codec type and per observation period must be determined because the DL FER is calculated from the number of erroneous and correct speech frames from N SACCH periods (N is an integer number).

It has to be mentioned that, unless other notified, in the following text the term DLFER is considered to be the DL FER per a codec type.

The determination of A) the above mentioned preliminary Standard Deviation Value and B) the final standard deviation value in measurement of DL FER per AMR codec type and per observation period is given in the following sections.

Downlink (DL) means that data are transmitted from a Base Transceiver Station (BTS) to a MS via the known Um interface. In DL the FER per AMR codec type and per call is calculated using the following formula:

$$DLFER(codec) = \frac{\sum_{i=1}^{N} NumErronousSpeechFrames_i(codec)}{24 \times N} 100\% \qquad (1)$$

Thereby, the numerator represents the sum of erroneous frames received by one MS during for instance 480ms. This time period corresponds to one SACCH period or 24 speech frames each one with the duration of 20 ms. The MS provides the number of erroneous speech frames in the Enhanced Measurement Report (EMR). N represents the observation period given in SACCH periods.

A) Determination of the standard deviation value in measurement of DL FER per SACCH period

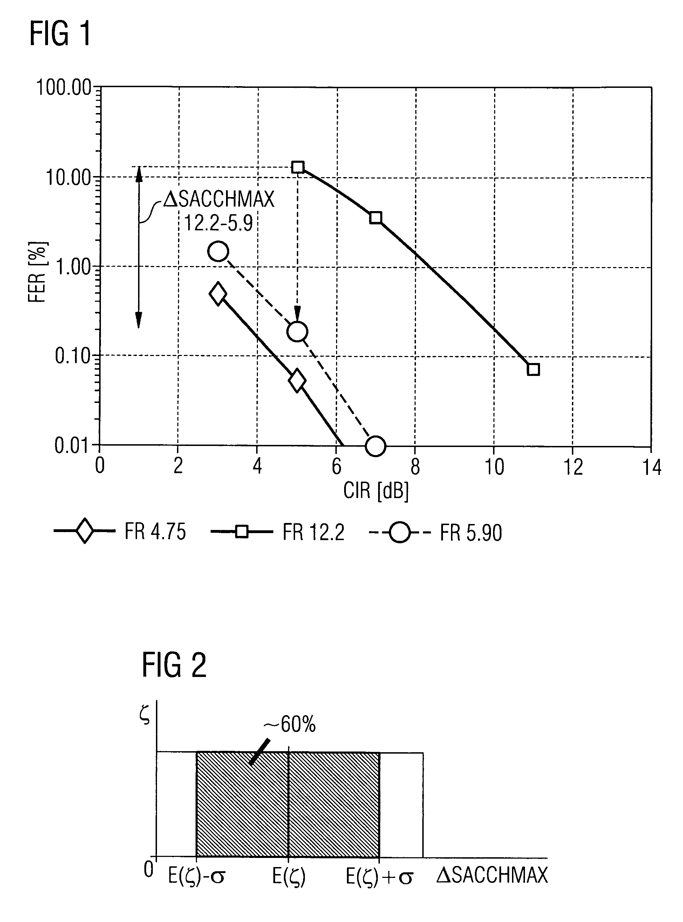

An example of the dependence of FER on the Carrier to Interference Ratio (CIR) for different AMR Full Rate (FR) codec types is shown in Fig. 1.

As can be seen from Figure 1, when during the DL FER measurement the AMR codec type has been changed for example from 12.2 kbps to 5.9 kbps, then the corresponding number of erroneous speech frames per a SACCH period will be distributed to the currently used AMR codec. According to the embodiment described here the currently used AMR codec is 5.9 kbps. A maximal error $\Delta_{SACCHMAXi \to j}$ (in this example i = 12.2 kbps and j = 5.9 kbps) in measurement of DL FER for the codec type j and per SACCH period depends on the settings of AMR thresholds and AMR hysteresis. The maximal error $\Delta_{SACCHMAXi \to j}$ is usually within the range of about of ones %.

The codec's threshold is the Carrier to Interference (CIR) ratio at which the mobile station will request a codec mode change. Hysteresis settings create a buffer that prevents the codec mode from continually changing when the CIR ratio varies repeatedly above or below the threshold value.

More detailed information about AMR codec procedure can be found for instance under http://wireless.agilent.com/rfcomms/refdocs/gsmgprs/gprsla_amr_bse_config.php.

According to the example depicted in Figure 1 the error is about of 10 %. This is visualized by the dashed arrow. It represents the worst case when the first 23 speech frames were coded by using the codec 12.2 while the last speech frame was coded by using the codec 5.9. It was assumed the maximum one change of codec per one SACCH period.

At this point it is mentioned that in the remaining text the codecs 12.2, 5.90, 4.75 will be given without the unit kbps.

In practice it is quite normal to see also two codec changes such as for instance the codec sequence 5.9 -> 12.2 -> 5.9 or 12.2 -> 4.75 -> 5.9. Also three codec changes are possible within one period of the SACCH.

To determine the maximal error the worst case must be considered also in these cases. Therefore it is the codec change 12.2 -> 5.9 for the case 5.9 -> 12.2 -> 5.9. However for the case 12.2 -> 4.75 -> 5.9 in the principle the codec change 12.2 -> 5.9 but also 4.75 -> 5.9 could be considered. According to Figure 1 the change 12.2 -> 5.9 leads to maximal error $\Delta_{SACCHMAX}$ = 10 % while the change 4.75 $\to$ 5.9 leads to a maximal error of -0.15 %. Therefore, in the following the codec change 12.2 -> 5.9 must be considered.

In order to determine the worst codec change according to above mentioned ideas an algorithm can be implemented in the BTS. Afterwards, because the dependences of FER on CIR are in general known, the errors $\Delta_{SACCHMAX}$ for all possible AMR codec type changes can be retrieved from an internal memory in the BTS.

In general the above mentioned errors represent a random variables $\xi$ changing in the range from 0 to $\Delta_{SACCHMAX}$. Provided that there is no contradictory information, the quantity is treated as if it is equally probable for its value to lie anywhere within the interval 0 to $\Delta_{SACCHMAX}$. This means that a model representing a uniform respectively a rectangular probability distribution is used.

Figure 2 illustrates such a uniform probability distribution, wherein under the assumption of a very large number of samples or a very long observation period the originally discrete uniform probability distribution has been replaced with a continuous uniform probability distribution.

The hypothesis to consider uniform probability distribution is also valid in cases where no information is available leading to decide which probability distribution should be considered. Simply said when there is no information to decide which probability of distribution has to be considered, the best is to consider a uniform one.

Afterwards the (preliminary) standard deviation value, which represents an interval into which a sample of the error will fall with the probability about of 60 % will be $\dfrac{\left| \Delta_{SACCHMAX} \right|}{2\sqrt{3}}$ and the mean value $E(\xi)$ will be $\dfrac{\Delta_{SACCHMAX}}{2}$ .

Thereby, $\dfrac{\left| \Delta_{SACCHMAX} \right|}{2\sqrt{3}}$ represents the (preliminary) standard deviation value for a uniform probability distribution.

B) Determination of the standard deviation value in measurement of DL FER per observation period N

From the theory of random variables it follows that the total respectively the final standard deviation value $\sigma_j$

in measurement of the DL FER per observation period N and per given codec j is given by

$$\sigma_j = \frac{1}{N}\sqrt{\sum_{n=1}^{N}\left(\frac{|\Delta_{SACCHMAX}|}{2\sqrt{3}}_{j,n}\right)^2} \qquad (2)$$

Thereby, $\frac{|\Delta_{SACCHMAX}|}{2\sqrt{3}}_{j,n}$ represents standard deviation value in measurement of the DL FER in the n-th SACCH period and for the codec j. The total mean value $\mu$ per observation period N and given codec j is given as

$$\mu_j = \frac{\sum_{n=1}^{N}\Delta_{SACCHMAX_{j,n}}}{2N} \qquad (3)$$

Afterwards, the resultant $DLFER_j$ for the j-th codec can be provided in the following form:

$$DLFER_j = DLFER(j) - \mu_j \pm \sigma_j \qquad (4)$$

Thereby, $DLFER(j)$ is the calculated DL FER using the above-given Equation (1) and respecting the fact that, if there was a codec change, the calculated DL FER is distributed to the currently used AMR codec.
$DLFER(j) - \mu_j$ is a corrected DL FER because the mean value $\mu_j$ represents a systematic error. The interval from $-\sigma_j$ to $+\sigma_j$ represents possible distortion of corrected DL FER for the j-th codec.
It should be noted that whereas the random variables $\xi$ are assumed with a uniform probability distribution, the resultant random variable with the mean value according to Equation (3) and the standard deviation value according to Equation (2) have a normal probability distribution.

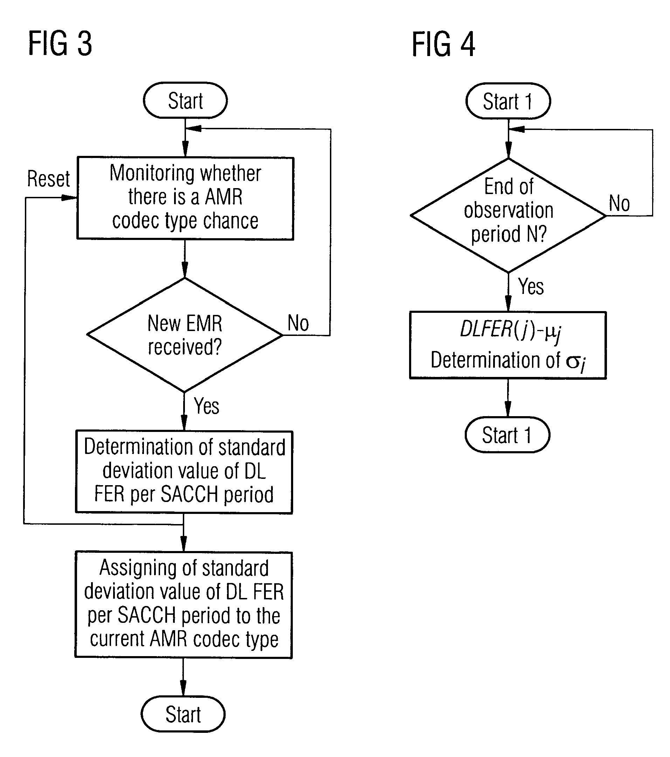

Figure 3 shows a flowchart summarizing the above-described determination of a preliminary Standard Deviation Value for measurements of the FER for the predefined period of a Slow Associated Control Channel (SACCH) and the assignment of the preliminary Standard Deviation Value to the current AMR codec type. The command RESET means that the information about the AMR codec type change from the previous SACCH period will be removed. The flow diagram shown in Figure 3 is used on a per call basis.
Figure 4 shows a flowchart summarizing the above-described calculation of the Standard Deviation Value for measurements of the FER for the given AMR codec type and for the predefined observation period based on the preliminary Standard Deviation Value. The flow diagram shown in figure 4 is used on a per call basis and on a per AMR codec type basis. It provides the total standard deviation value $\sigma_j$ for j- th codec.
The described method for calculating a Standard Deviation Value for measurements of the Frame Erasure Rate for a speech transmission using an Adaptive Multi Rate codec procedure for a predefined observation period and for a given Adaptive Multi Rate codec type may provide the advantage an operator of a telecommunication network will be able to provide the DL FER on a per AMR codec basis in such a way that the reliability of the measurement will be evaluated by the standard deviation value $\sigma$.
The described method can be provided to customer also as a type of tool in such a way that the customer can define a margin or interval for the standard deviation value when the measured value is yet acceptable. For example if the margin is 10 % from the measured DL FER which let us consider is equal to 7 % while $\sigma$ = 1 %, then the DL FER will not be evaluated as reliable because the $\sigma$ = 1 % reflects a possible 14 % (1/7 * 100 %) distortion.
It should be noted that the term "comprising" does not exclude other elements or steps and "a" or "an" does not exclude a plurality. Also elements described in association with different embodiments may be combined.

List of reference signs:

| 500 | part of GSM network |
| 502 | Base Station Subsystem |
| 505 | Base Transceiver Station |
| 507 | Base Station Controller |
| 508 | Mobile Switching Center |
| 509 | "A" interface |
| 510 | Mobile Station |

**Claims**

1. Method for calculating a Standard Deviation Value for measurements of the Frame Erasure Rate for a speech transmission using an Adaptive Multi Rate codec procedure for a predefined observation period and for a given Adaptive Multi Rate codec type, the method comprising

    • determining a preliminary Standard Deviation Value for measurements of the Frame Erasure Rate for a predefined period of a Control Channel, and
    • calculating the Standard Deviation Value for measurements of the Frame Erasure Rate for the given Adaptive Multi Rate codec type and for the predefined observation period based on the preliminary Standard Deviation Value.

2. The method according to claim 1, wherein
if there is a change of the Adaptive Multi Rate codec type the determined preliminary Standard Deviation Value is assigned to the Adaptive Multi Rate codec type, which was last used within the predefined period of the Control Channel.

3. The method according to one of the claims 1 or 2, wherein for determining the preliminary Standard Deviation Value a uniform distribution of the Frame Erasure Rate between a first Frame Erasure Rate and a second Frame Erasure Rate is assumed.

4. The method according to claim 3, wherein
the first Frame Erasure Rate is Zero.

5. The method according to one of the claims 1 or 4, wherein the Frame Erasure Rate is a Downlink Frame Erasure Rate.

6. The method according to one of the claims 1 or 5, wherein the Adaptive Multi Rate codec procedure is

    - a Full Rate Codec procedure or
    - a Half Rate Codec procedure.

7. The method according to one of the claims 1 or 6, wherein the Control Channel is a Slow Associated Control Channel.

8. The method according to claim 7, wherein
the observation period is an integer multiple of the period of the Slow Associated Control Channel.

9. The method according to one of the claims 1 or 5, further comprising

    • providing the Frame Erasure Rate on a per codec type basis.

10. The method according to claim 9, wherein
for providing the Frame Erasure Rate on a per codec type basis a systematic error is taken into account.

11. Equipment of a mobile telecommunication network, in particular a Base Transceiver Station or a Mobile Station of a mobile telecommunication network, the equipment comprising a processor, which is adapted for performing the method as set forth in any one of the claims 1 to 10.

**12.** A computer-readable medium on which there is stored a computer program for calculating a Standard Deviation Value for measurements of the Frame Erasure Rate for a speech transmission using an Adaptive Multi Rate codec procedure for a predefined observation period and for a given Adaptive Multi Rate codec type, the computer program, when being executed by a data processor, is adapted for controlling the method as set forth in any one of the claims 1 to 10.

**13.** A program element for calculating a Standard Deviation Value for measurements of the Frame Erasure Rate for a speech transmission using an Adaptive Multi Rate codec procedure for a predefined observation period and for a given Adaptive Multi Rate codec type, the program element, when being executed by a data processor, is adapted for controlling the method as set forth in any one of the claims 1 to 10.

# FIG 1

FER [%]

ΔSACCHMAX
12.2-5.9

CIR [dB]

◇— FR 4.75    —□— FR 12.2    --○-- FR 5.90

# FIG 2

$\zeta$

~60%

$0$    $E(\zeta)-\sigma$    $E(\zeta)$    $E(\zeta)+\sigma$    ΔSACCHMAX

# FIG 3

```
            ┌─────────┐
            │  Start  │
            └────┬────┘
                 │    ◄──────────────────┐
        ┌────────▼──────────┐            │
Reset   │ Monitoring whether│            │
 ───────│  there is a AMR   │            │
   │    │ codec type chance │            │
   │    └────────┬──────────┘            │
   │             │                       │
   │          ╱──▼──╲         No         │
   │        ╱  New EMR ╲──────────────────┘
   │        ╲ received? ╱
   │          ╲──┬──╱
   │             │ Yes
   │    ┌────────▼──────────┐
   │    │ Determination of  │
   │    │ standard deviation│
   │    │ value of DL FER   │
   │    │ per SACCH period  │
   │    └────────┬──────────┘
   │             │
   │    ┌────────▼──────────┐
   └───►│ Assigning of      │
        │ standard deviation│
        │ value of DL FER   │
        │ per SACCH period  │
        │ to the current    │
        │ AMR codec type    │
        └────────┬──────────┘
            ┌────▼────┐
            │  Start  │
            └─────────┘
```

# FIG 4

```
            ┌─────────┐
            │ Start 1 │
            └────┬────┘
                 │    ◄──────────────┐
            ╱────▼────╲               │
          ╱   End of   ╲      No       │
         ╱  observation  ╲─────────────┘
         ╲   period N?   ╱
          ╲────┬────╱
               │ Yes
      ┌────────▼──────────┐
      │   DLFER(j)-μj      │
      │ Determination of σj│
      └────────┬──────────┘
          ┌────▼────┐
          │ Start 1 │
          └─────────┘
```

FIG 5   PRIOR ART

FIG 6   PRIOR ART

EP 2 076 074 A1

**European Patent Office**

**EUROPEAN SEARCH REPORT**

Application Number

EP 07 02 5141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/069553 A1 (HAKANSSON STEFAN [SE] ET AL) 30 March 2006 (2006-03-30) * paragraph [0045] - paragraph [0047]; figure 5 * ----- | 1-13 | INV. H04Q7/34 |
| Y | WO 2006/068552 A (ERICSSON TELEFON AB L M [SE]; TIDESTAV CLAES [SE]; ALMGREN MAGNUS [SE]) 29 June 2006 (2006-06-29) * page 7, line 13 - page 9, line 15 * ----- | 1,11-13 | |
| Y | "Digital cellular telecommunications system (Phase 2+); Radio subsystem link control (3GPP TS 45.008 version 7.9.0 Release 7); ETSI TS 145 008" ETSI STANDARDS, LIS, SOPHIA ANTIPOLIS CEDEX, FRANCE, vol. 3-G1, no. V7.9.0, 1 October 2007 (2007-10-01), XP014040326 ISSN: 0000-0001 * page 31 - page 48 * ----- | 2-10 | |
| A | WO 2007/023156 A (SIEMENS AG [DE]; HOFMANN JUERGEN [DE]; VUTUKURI ESWAR [GB]) 1 March 2007 (2007-03-01) * abstract * * page 2, line 8 - page 2, line 23 * ----- | 1-13 | TECHNICAL FIELDS SEARCHED (IPC) H04Q |

The present search report has been drawn up for all claims

| Place of search | Date of completion of the search | Examiner |
|---|---|---|
| Munich | 4 July 2008 | Lastoria, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 07 02 5141

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2008

| Patent document cited in search report | | Publication date | Patent family member(s) | | Publication date |
|---|---|---|---|---|---|
| US 2006069553 | A1 | 30-03-2006 | CN | 101073109 A | 14-11-2007 |
| WO 2006068552 | A | 29-06-2006 | US | 2008139235 A1 | 12-06-2008 |
| WO 2007023156 | A | 01-03-2007 | NONE | | |

EPO FORM P0459

For more details about this annex : see Official Journal of the European Patent Office, No. 12/82